# EUROPÄISCHE PATENTSCHRIFT

(11) **EP 1 566 092 B1**
(45) Veröffentlichungstag und Bekanntmachung des Hinweises auf die Patenterteilung: **13.02.2008**
(21) Anmeldenummer: 05101097.3
(22) Anmeldetag: 15.02.2005
(51) Int. Cl.: A01D 45/02

(54) **Erntegerät mit einem Stängelhäcksler**
Harvester with chopper
Dispositif de récolte avec broyeur

(30) Priorität: 20.02.2004 DE 102004008342
(43) Veröffentlichungstag der Anmeldung: 24.08.2005
(73) Patentinhaber: Maschinenfabrik Kemper GmbH & Co. KG, 48973 Stadtlohn (DE)
(72) Erfinder: Wübbels, Richard, 46414 Rhede (DE); Schulze Eißing, Josef, 48739 Legden (DE)
(74) Vertreter: Holst, Sönke

(56) Entgegenhaltungen:
- DE-A1- 2 003 964
- DE-A1- 2 549 136
- NL-C2- 1 007 189

## Beschreibung

Die Erfindung betrifft ein Erntegerät, insbesondere einen Maispflücker, mit zumindest zwei Einzugs- und Pflückeinheiten, die jeweils mit einem Pflückspalt und einer Einzugseinrichtung versehen sind, wobei die Einzugseinrichtung betreibbar ist, Pflanzen in den Pflückspalt einzuziehen, durch welchen Fruchtstände von den Pflanzen abtrennbar sind, und mit einem stromab der Einzugseinrichtung angeordneten Stängelhäcksler zum Zerkleinern der Stängel der Pflanzen, die zerkleinert auf dem Feld abgelegt werden, und wobei der Stängelhäcksler ein Messer aufweist, das um eine sich zumindest näherungsweise vertikal erstreckende Achse in Rotation versetzbar ist.

Es werden verschiedene Fruchtarten landwirtschaftlich angebaut, bei denen beabsichtigt ist, nur die Fruchtstände zur Weiterverarbeitung zu verwenden. Beispiele sind Sonnenblumen, Sojabohnen, Baumwolle oder Kolbenmais. Derartige Fruchtarten werden in der Regel mit so genannten Pflückern geerntet, die in der Regel mehrere nebeneinander angeordnete Einzugs- und Pflückeinheiten aufweisen, um mehrere Reihen der in nebeneinander liegenden Reihen angebauten Pflanzen gleichzeitig abernten zu können. Jede Einzugs- und Pflückeinheit weist einen Pflückspalt und eine Einzugseinrichtung auf. Letztere setzt sich in der Regel aus zwei beidseits und unterhalb des Pflückspalts angeordneten Pflückwalzen zusammen, die gegensinnig rotieren. Die Einzugseinrichtung zieht die Pflanzen nach unten in den Pflückspalt ein. Letzterer ist derart schmal dimensioniert, dass zwar der Stängel der Pflanze hindurch passt, jedoch aber nicht die Fruchtstände. Diese werden somit durch den Pflückspalt vom Stängel abgetrennt und anschließend einer Verwertung zugeführt, beispielsweise in einem Mähdrescher ausgedroschen.

Die Stängel der Pflanzen verbleiben auf dem Feld. Um die Verrottung zu beschleunigen, ist es gebräuchlich, sie durch stromab der Einzugseinrichtungen angeordnete Stängelhäcksler zu zerkleinern. Übliche Ausführungsformen derartiger Stängelhäcksler weisen um eine etwa vertikale Achse rotierende Messer auf, deren Hüllkreis die Einzugseinrichtung überdeckt. Im Stand der Technik ist es gebräuchlich, jeder Einzugs- und Pflückeinheit einen eigenen derartigen Stängelhäcksler zuzuordnen, s. DE 25 27 645 A oder DE 25 49 136 A. Der Stängel wird durch einen Stängelhäcksler in kleine Abschnitte zerteilt. Bei anderen Ausführungsformen sind die Pflückwalzen mit Messern versehen, die die Stängel in Längs- oder Querrichtung zerschneiden.

Stängelhäcksler mit stromab der Einzugseinrichtung rotierenden Messern sind derzeit hauptsächlich in Europa gebräuchlich. In Europa wird Mais in der Regel in einem Reihenabstand von 75 cm angebaut. In den USA finden hingegen unterschiedliche Reihenabstände Verwendung, beispielsweise 37,5 cm, 50 cm oder 55 cm. Stängelhäcksler werden in den USA derzeit eher selten verwendet.

Mit der Verbreitung der so genannten Non-Tillage-Bodenbearbeitung, bei der das Feld nach der Ernte nur noch mit einer Sämaschine bearbeitet wird, die mit einigen Bodenbearbeitungswerkzeugen ausgestattet ist, erweist sich nunmehr auch in den USA der Einsatz von Stängelhäckslern als sinnvoll, um die Verrottung der auf dem Feld verbleibenden Stängel zu beschleunigen. Die in den USA gebräuchlichen, engeren Reihenabstände könnten analog auch in Europa Verwendung finden.

Es ist somit wünschenswert, benachbarte Einzugs- und Pflückeinheiten derart nahe aneinander anbringen zu können, dass mit ihnen die Ernte auch enger nebeneinander angebauter Pflanzenreihen möglich wird, beispielsweise von im Abstand von 50 cm angebauten Reihen. Zur Anpassung der Erntegeräte an den Reihenabstand der zu erntenden Pflanzen ist es üblich, die Einzugs- und Pflückeinheiten in horizontaler, sich quer zur Vorwärtsrichtung erstreckenden Richtung verschiebbar auf einem Querträger anzubringen.

Falls die Einzugs- und Pflückeinheiten jedoch mit einem Stängelhäcksler ausgestattet sind, ist es problematisch, die Einzugs- und Pflückeinheiten hinreichend nahe aneinander zu positionieren, da die Stängelhäcksler benachbarter Einzugs- und Pflückeinheiten dann miteinander kollidieren würden. Es wäre zwar eine Verkleinerung des Durchmessers des Stängelhäcklers denkbar. Dadurch würde sich dessen Umfangsgeschwindigkeit und in gleichem Maße auch die Arbeitsqualität verschlechtern.

In der DE 20 03 964 A wird ein Feldhäcksler beschrieben, der zwei nebeneinander angeordnete Einzugseinrichtungen in Form von jeweils zwei zusammenwirkenden Schneckenförderern aufweist. Unterhalb des rückwärtigen Endes der Schneckenförderer befindet sich eine einzige, um die Hochachse rotierende Scheibe, an deren Oberseite Häckselmesser und an deren Umfang Schneidmesser angebracht sind. Die Schneidmesser trennen die Stängel der Pflanzen vom Boden, während die Häckselmesser die Stängel sukzessive zerkleinern. Die Pflanzenteile werden dann einem Förderer zugeführt, der sie auf einem Anhänger ablegt. Hier ist zwar ein Häcksler zwei Einzugseinrichtungen zugeordnet, jedoch hat der Fachmann keinen Anlass, diese Merkmale auf einen Pflücker zu übertragen.

Die der Erfindung zu Grunde liegende Aufgabe wird darin gesehen, einen Erntevorsatz mit Einzugs- und Pflückeinheiten und einem Stängelhäcksler bereitzustellen, der eine hinreichend hohe Umfangsgeschwindigkeit aufweist und einen engen Abstand benachbarter Einzugs- und Pflückeinheiten ermöglicht.

Diese Aufgabe wird erfindungsgemäß durch die Lehre des Patentanspruchs 1 gelöst, wobei in dem weiteren Patentanspruch Merkmale aufgeführt sind, die die Lösung in vorteilhafter Weise weiterentwickeln.

Die Erfindung bezieht sich auf ein Erntegerät eingangs erwähnter Art. Es wird vorgeschlagen, dass ein einziger Stängelhäcksler mit zwei oder mehr benachbachbarten Einzugs- und Pflückeinheiten zusammenwirkt. Auf diese Weise vermeidet man das Problem möglicher Kollisionen von benachbarten Stängelhäckslern bei kleinen Reihenabständen. Außerdem wird die Anzahl an Messern und Antriebseinrichtungen für Stängelhäcksler reduziert, so dass die Herstellungskosten und das Gewicht des Erntevorsatzes verringert werden. Durch den relativ großen Durchmesser des vom Messer des Stängelhäckslers beschriebenen Hüllkreises erzielt man eine relativ hohe Umfangsgeschwindigkeit und somit eine recht gute Häckselqualität.

In der Zeichnung ist ein nachfolgend näher beschriebenes Ausführungsbeispiel der Erfindung dargestellt. Es zeigt:
- Fig. 1: eine Draufsicht auf ein erfindungsgemäßes Erntegerät,
- Fig. 2: einen Schnitt durch das Erntegerät aus Figur 1 entlang der Linie 2-2, und
- Fig. 3: einen Schnitt durch das Erntegerät aus Figur 1 entlang der Linie 3-3.

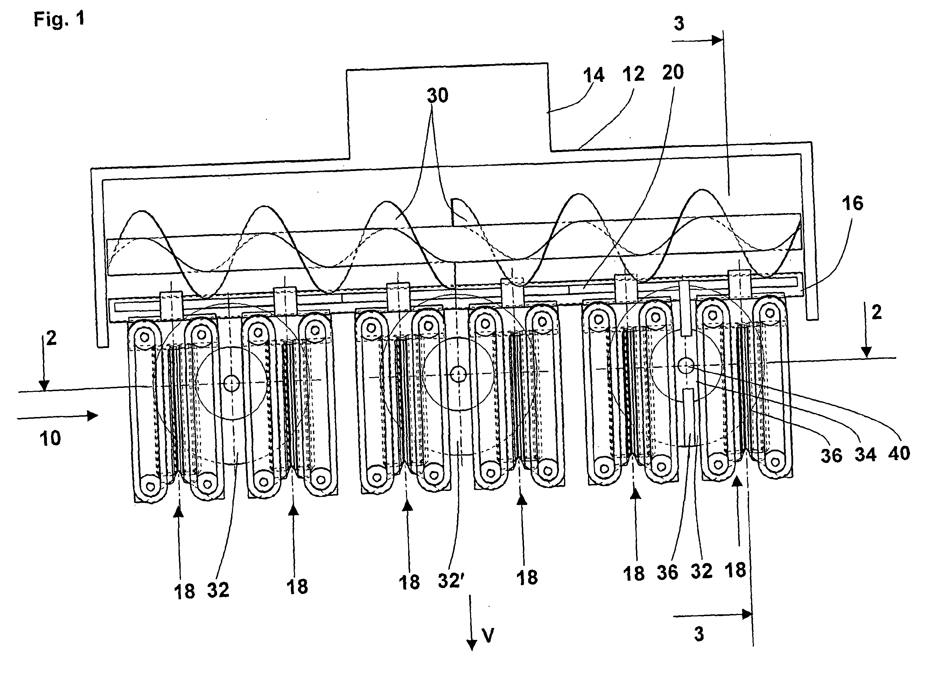

In der Figur 1 ist ein erfindungsgemäßes Erntegerät 10 in Form eines Erntevorsatzes für einen Mähdrescher in Draufsicht dargestellt. Das Erntegerät 10 umfasst einen Rahmen 12, der an dem Schrägförderer 14 des Mähdreschers abnehmbar angebracht ist. An dem Rahmen 12 erstreckt sich ein Querträger 16 horizontal und quer zur Vorwärtsrichtung V, in der das Erntegerät 10 bei der Ernte über ein Feld bewegt wird. An dem Querträger 16 sind insgesamt sechs gleichartige Einzugs- und Pflückeinheiten 18 montiert. Es kann auch eine beliebige andere Anzahl an Einzugs- und Pflückeinheiten 18 verwendet werden. Die Einzugs- und Pflückeinheiten 18 werden durch eine sich über die Breite des Erntegeräts 10 erstreckende Querwelle 20 angetrieben, die sich im Innern des hohlen Querträgers 16 befindet. Sie könnte auch außerhalb des Querträgers 16 angeordnet sein. Die Querwelle 20 wird über einen nicht dargestellten Antriebsstrang in an sich bekannter Weise vom Mähdrescher her angetrieben.

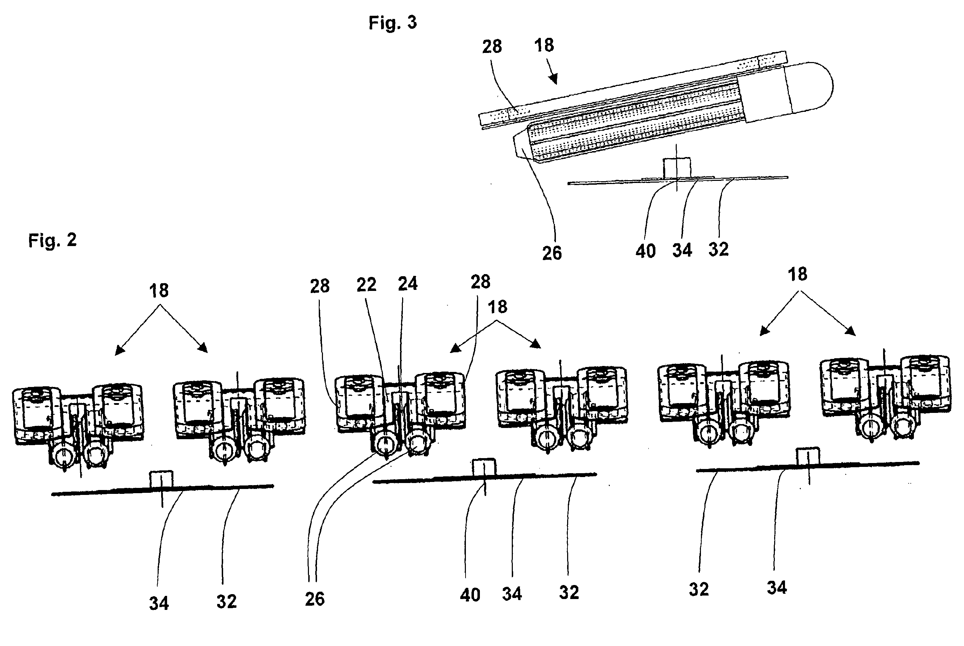

Der Aufbau der Einzugs- und Pflückeinheiten 18 ist an sich konventionell und in den Figuren 2 und 3 am Besten erkennbar. Die Einzugs- und Pflückeinheiten 18 umfassen jeweils ein Abstreifblech 22, in dem sich ein in Vorwärtsrichtung V nach vorn geöffneter Pflückspalt 24 befindet, eine Einzugseinrichtung 26 in Form von zwei sich unterhalb des Pflückspaltes 24 in dessen Längsrichtung erstreckenden, gegensinnig rotierenden Pflückwalzen und zwei mit Mitnehmern ausgestattete Kettenförderer 28, die sich oberhalb des Abstreifblechs 22 befinden.

Im Betrieb ziehen die Kettenförderer 28 die Stängel der auf einem Feld stehenden Pflanzen zwischen sich nach hinten ein und verbringen sie in den Pflückspalt 24. Unterhalb des Pflückspalts 24 werden die Stängel von den Pflückwalzen der Einzugseinrichtung 26 erfasst und nach unten eingezogen. Die Pflanzen werden durch die Kettenförderer 28 entlang des Pflückspalts 24 nach hinten verbracht. Fruchtstände, wie beispielsweise Maiskolben, werden durch den Pflückspalt 24 von den Stängeln getrennt und durch die Kettenförderer 28 nach hinten abtransportiert. Dort werden sie durch eine Querförderschnecke 30 dem Schrägförderer 14 zugeführt. Anstelle der dargestellten, konventionellen Einzugs- und Pflückeinheiten 18 können auch Einzugs- und Pflückeinheiten mit Rotationseinzug verwendet werden, wie sie in der EP 1 305 899 A beschrieben werden, deren Offenbarung durch Verweis mit in die vorliegenden Unterlagen aufgenommen wird.

Um die auf dem Feld verbleibenden Stängel zu zerkleinern und ihre Verrottung zu beschleunigen, ist das Erntegerät 10 mit Stängelhäckslern 32 ausgestattet. Die Stängelhäcksler 32 setzen sich aus einer Scheibe 34 mit daran pendelnd gelagerten Messern 36 zusammen, die an den vorlaufenden und vorzugsweise auch an den nachlaufenden Kanten angeschliffen sind, um sie nach Abnutzung umdrehen zu können. Die Scheibe 34 ist in ihrer Mitte um eine etwa vertikal verlaufende Achse 40 drehbar gelagert und antreibbar. Es sind auch beliebige andere Ausführungsformen der Stängelhäcksler denkbar, wie mit starr an der Scheibe 34 angebrachten Messern 36 oder mit Messern, die direkt an einer mittigen Welle angebracht sind. Die Zahl der Messer 36 ist beliebig. Die Stängelhäcksler 32 werden durch (nicht eingezeichnete) Getriebe angetrieben, die mit der Querwelle 20 in Antriebsverbindung stehen. Die Messer 36 beschreiben beim Betrieb Hüllkreise 38, die jeweils die Pflückspalte 24 zweier benachbarter Einzugs- und Pflückeinheiten 18 überdecken. Dadurch erreicht man, dass die unten zwischen den Einzugseinrichtungen 26 beider benachbarter Einzugs- und Pflückeinheiten 18 austretenden Stängel zerkleinert auf dem Feld abgelegt werden. Für zwei Einzugs- und Pflückeinheiten 18 ist jeweils nur ein Stängelhäcksler 32 erforderlich, was die Herstellungskosten und das Gewicht des Erntegeräts 18 verringert.

Ein weiterer Vorteil der Stängelhäcksler 32 besteht darin, dass sie einen relativ großen Änderungsbereich des Abstands benachbarter Einzugs- und Pflückeinheiten 18 ermöglichen. Die Einzugs- und Pflückeinheiten 18 sind, wie auch die Stängelhäcksler 32 (vorzugsweise mit Ausnahme des mittleren, sich genau vor dem Schrägförderer 14 befindlichen Stängelhäckslers 32'), verschiebbar am Querträger 16 gelagert. Die Stängelhäcksler 32 sind unabhängig von den Einzugs- und Pflückeinheiten 18 verschiebbar; es wäre aber auch denkbar, jeweils einen Stängelhäcksler 32 an einer Einzugs- und Pflückeinheit 18 anzubringen und mit ihr gemeinsam zu verschieben.

Auf diese Weise hat man die Möglichkeit, die Einzugs- und Pflückeinheiten 18 mit den Stängelhäckslern 32 entsprechend des Reihenabstands des zu erntenden Felds zu positionieren. Der relativ große Hüllkreis der Messer 36 der Stängelhäcksler 32 ermöglicht, die Einzugs- und Pflückeinheiten 18 in einem relativ großen Abstand (sogar noch größer, als in der Figur 1 gezeigt) und in einem relativ kleinen Abstand anzuordnen, ohne dass benachbarte Stängelhäcksler kollidieren würden oder zu synchronisieren wären. Es kann ein Einstellbereich erreicht werden, der beispielsweise einem Reihenabstand von 37,5 bis 75 cm entspricht.

## Patentansprüche

1. Erntegerät (10), insbesondere Maispflücker, mit zumindest zwei Einzugs- und Pflückeinheiten (18), die jeweils mit einem Pflückspalt (24) und einer Einzugseinrichtung (26) versehen sind, wobei die Einzugseinrichtung (26) betreibbar ist, Pflanzen in den Pflückspalt (24) einzuziehen, durch welchen Fruchtstände von den Pflanzen abtrennbar sind, und mit einem stromab der Einzugseinrichtung (26) angeordneten Stängelhäcksler (32) zum Zerkleinern der Stängel der Pflanzen, die zerkleinert auf dem Feld abgelegt werden, und wobei der Stängelhäcksler (32) ein Messer (36) aufweist, das um eine sich zumindest näherungsweise vertikal erstreckende Achse (40) in Rotation versetzbar ist, **dadurch gekennzeichnet, dass** der von dem Messer (36) des Stängelhäckslers beschriebene Hüllkreis (38) wenigstens die Einzugseinrichtungen (26) von zwei benachbarten Einzugs- und Pflückeinheiten (18) überdeckt.

2. Erntegerät (10) nach Anspruch 1, **dadurch gekennzeichnet, dass** die Einzugs- und Pflückeinheiten (18) seitlich verschiebbar an einem Querträger (16) gelagert sind, an dem auch der Stängelhäcksler (32) abgestützt ist.

## Claims

1. Harvesting tool (10), in particular a corn picker, comprising at least two gathering and picking units (18), which are respectively provided with a picking gap (24) and a gathering device (26), the gathering device (26) being able to be operated to draw plants into the picking gap (24) by which seed heads can be separated from the plants, and comprising a stalk chopper (32), disposed downstream of the gathering device (26), for chopping up the stems of the plants, which are deposited on the field in the chopped-up state, and wherein the stem chopper (32) has a blade (36) which can be set in rotation about an at least approximately vertically extending axis (40), **characterized in that** the envelope circle (38) described by the blade (36) of the stem chopper covers at least the gathering devices (26) of two adjacent gathering and picking units (18).

2. Harvesting tool (10) according to Claim 1, **characterized in that** the gathering and plucking units (18) are mounted such that they are laterally displaceable on a cross member (16) on which the stem chopper (32), too, is supported.

## Revendications

1. Dispositif de récolte (10), en particulier cueilleur de maïs, comportant au moins deux unités d'amenage et de cueillage (18), qui sont munies chacune d'une fente de cueillage (24) et d'un ameneur (26), l'ameneur (26) étant apte à être exploité pour introduire les végétaux dans la fente de cueillage (24), par laquelle les épis peuvent être séparés des végétaux, et comportant un broyeur de tiges (32), agencé en aval de l'ameneur (26) et destiné à couper en menus morceaux les tiges des végétaux, qui sont déposées sous forme broyée sur le champ, et le broyeur de tiges (32) comportant une lame de coupe (36), qui est apte à être entraînée en rotation autour d'un axe (40) orienté au moins à peu près verticalement, **caractérisé en ce que** l'enveloppante (38) décrite par la lame de coupe (36) du broyeur de tiges couvre au moins les ameneurs (26) de deux unités d'amenage et de cueillage (18) adjacentes.

2. Dispositif de récolte (10) selon la revendication 1, **caractérisé en ce que** les unités d'amenage et de cueillage (18) sont montées de manière mobile latéralement sur un support transversal (16), sur lequel prend également appui le broyeur de tiges (32).
